# EUROPÄISCHE PATENTSCHRIFT

(11) **EP 1 957 781 B1**
(45) Veröffentlichungstag und Bekanntmachung des Hinweises auf die Patenterteilung: **17.06.2009**
(21) Anmeldenummer: 06807393.1
(22) Anmeldetag: 19.10.2006
(51) Int. Cl.: F02D 41/40

(54) **VERFAHREN ZUR ANSTEUERUNG EINES KRAFTSTOFF-INJEKTORS EINES DIESELMOTORS**
METHOD FOR CONTROLLING A FUEL INJECTOR ON A DIESEL ENGINE
PROCEDE POUR COMMANDER UN INJECTEUR DE CARBURANT D'UN MOTEUR DIESEL

(30) Priorität: 02.12.2005 DE 102005057571
(43) Veröffentlichungstag der Anmeldung: 20.08.2008
(73) Patentinhaber: ROBERT BOSCH GMBH, 70442 Stuttgart (DE)
(72) Erfinder: POLACH, Stefan, 70469 Stuttgart (DE); TORKZADEH, Dara, 71272 Renningen-Malmsheim (DE)
(86) Internationale Anmeldenummer: PCT/EP2006/067562
(87) Internationale Veröffentlichungsnummer: WO 2007/062914

(56) Entgegenhaltungen:
- EP-A- 1 475 526
- EP-A- 1 744 037
- EP-A2- 1 199 460
- EP-A2- 1 582 729
- DE-A1- 19 526 516

## Beschreibung

### Stand der Technik

Die Erfindung betrifft ein Verfahren zur Ansteuerung eines Kraftstoff-Injektors eines Dieselmotors mit einer vorbestimmten Ansteuerdauer ab einem Ansteuerbeginn, wobei ein Sollwert für einen Brennbeginn einer Brennraumfüllung des Dieselmotors ermittelt wird. Die Erfindung betrifft darüber hinaus ein Steuergerät, das den Ablauf eines solchen Verfahrens steuert.

Ein solches Verfahren und ein solches Steuergerät ist jeweils aus der DE 195 36 110 A1 bekannt. Bei dem bekannten Verfahren wird der Sollwert aus gemessenes Betriebsparametern des Dieselmotors bestimmt, ein Istwert aus Signalen verschiedener Sensoren bestimmt, und der Istwert in einer geschlossenen Regelschleife auf den Sollwert geregelt. Die Stellgröße für die Regelung ist dabei der Beginn eines Signals, mit dem der Injektor zur Auslösung einer Einspritzung angesteuert wird. Der Beginn dieses Signals wird im Folgenden auch als Ansteuerbeginn bezeichnet.

Die EP 1475 526 A beschreibt ein Verfahren zur Bestimmung des Einspritzzeitpunktes bzw. des Zeitpunktes zur Ansteuerung eines Injektors. Ausgehend von verschiedenen Größen wird ein gewünschter Einspritzbeginn vorgegeben. Dieser wird unter Berücksichtigung des Zündverzugs korrigiert. Mit dem so korrigierten Signal erfolgt die Ansteuerung des Injektors.

Die DE 195 26 516 A beschreibt ebenfalls ein Verfahren zur Bestimmung des Einspritzzeitpunktes bzw. des Zeitpunktes zur Ansteuerung eines Injektors. Ausgehend von verschiedenen Größen wird ein gewünschter Winkel für den Einspritzbeginn vorgegeben. Dieser wird in eine Zeitgröße umgewandelt und unter Berücksichtigung des Zündverzugs korrigiert. Mit dem so korrigierten Signal erfolgt die Ansteuerung des Injektors.

Beiden Entgegenhaltungen ist gemeinsam, dass ein Signal bezüglich des Einspritzbeginns vorgegeben wird

Basiswerte für den Ansteuerbeginn sind dazu zum Beispiel in einem Kennfeld abgelegt, das durch Betriebsparameter des Dieselmotors adressiert wird. Zwischen dem Ansteuerbeginn und dem Brennbeginn liegt die sogenannte Anzugsverzögerung oder Totzeit des Injektors und der sogenannte Zündverzug. Die Anzugsverzögerung ist durch die Bauart des Injektors bedingt und entspricht einer Verzögerung, mit der der Injektor auf das Ansteuersignal mit dem Beginn einer Einspritzung reagiert. Der Zündverzug liegt zwischen diesem Einspritzbeginn und einem tatsächlichen Beginn der Verbrennung, also dem Brennbeginn. Der Brennbeginn wird beim Dieselmotor bekanntlich durch eine Selbstzündung des Kraftstoffs ausgelöst, der in die durch Verdichten erhitzte Brennraumfüllung eingespritzt wird.

Diese Einflüsse können bei der Festlegung der Kennfeldwerte oder durch Korrektur der ausgelesenen Werte berücksichtigt werden. Die Korrektur kann durch einen Regeleingriff oder durch Verknüpfen mit betriebsparameterabhängig bestimmten Korrekturwerten erfolgen.

Es hat sich gezeigt, dass bei den bekannten Verfahren und dort insbesondere bei Betriebspunktwechseln ein unrunder Motorlauf aufgetreten ist.
Aus dem später Veröffentlichten Dokument EP 1 744 037 A ist ein Steuerverfahren bekannt , bei dem Istwerte des Verbrennungsbeginns ermittelt und auf den Sollwert eingestellt werden.

Das erfindungsgemäße Verfahren zeichnet sich dagegen dadurch aus, dass ein Zündverzug, der zwischen dem Ansteuerbeginn und dem Brennbeginn liegt, aus Betriebsparametern des Dieselmotors mit einem Rechenmodell geschätzt wird und der Ansteuerbeginn aus dem Sollwert für den Brennbeginn und dem geschätzten Zündverzug gebildet wird und dass der Brennbeginn geregelt wird. Das erfindungsgemäße Steuergerät zeichnet sich dadurch aus, dass es den Ablauf eines solchen Verfahrens steuert.

### Vorteile der Erfindung

Eine Schätzung des Zündverzugs mit einem Rechenmodell, das Betriebsparameter des Dieselmotors verarbeitet, ergibt insgesamt eine Annäherung des Istwertes des Verbrennungsbeginns an seinen Sollwert. Bei einem Dieselmotor, der ohne Regelung des Verbrennungsbeginns arbeitet, ergibt sich dadurch eine verbesserte Laufruhe und ein effizienterer Motorbetrieb in einem breiten Bereich von Betriebszuständen und Übergängen zwischen Betriebszuständen. Bei Dieselmotoren mit einer Regelung des Verbrennungsbeginns ergibt sich eine wesentliche Verbesserung der Laufruhe beim Übergang zwischen verschiedenen Betriebspunkten und/oder Brennverfahren, da die Basiswerte für den Ansteuerbeginn, der zu einem bestimmten Brennbeginn führen soll, mit einer sofort wirksamen Zündverzugskorrektur verknüpft werden.

Die über die Regelung ergänzend wirkende Korrektur einer Struktur, die mit Sollwerten für einen Ansteuerbeginn arbeitet, hat dagegen Nachteile: Wenn sie schnell reagiert, kann es im instationären Betrieb zu Überschwingern kommen, die sich ebenfalls negativ auf das Betriebsverhalten des Dieselmotors auswirken. Wenn die Überschwinger dagegen vermieden werden, arbeitet die Regelung zu langsam, um Fehlanpassungen bei schnellen Betriebspunktwechseln wirksam kompensieren zu können.

Zur Einhaltung künftiger Abgasnormen wird es notwendig werden, Dieselmotoren in verschiedenen Betriebsbereichen mit verschiedenen Brennverfahren zu betreiben. Dabei wird insbesondere zwischen einem Magerbetrieb mit geschichteter und damit inhomogener Kraftstoffverteilung im Brennraum und einem Homogenbetrieb mit homogenerer Kraftstoffverteilung unterschieden. Die homogenere Kraftstoffverteilung wird zumindest teilweise durch einen vergrößerten Zündverzug erzielt. Der vergrößerte Zündverzug wird durch eine hohe Abgasrückführrate und damit durch einen erhöhten Inertgasanteil an der Brennraumfüllung erzeugt.

Bei ausreichend hohen Abgasrückführraten kommt es zu Wechselwirkungen zwischen verschiedenen Einflüssen auf den Zündverzug. So wird der Einfluss einer erhöhten Brennraumfüllung, die den Zündverzug eher verringern würde, durch den aus der Abgasrückführung resultierenden Inertgasanteil verändert. Gleichzeitig verändert der Temperatureinfluss der rückgeführten Abgase die Temperatur der Brennraumfüllung. Es ist daher besonders bevorzugt, dass der Zündverzug mit einem physikalischen Modell geschätzt wird, dass miteinander gekoppelte Einflüsse von wenigstens zwei Betriebsparametern des Dieselmotors nachbildet.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen ,und solange diese Kombinationen oder Alleinstellungen zum beanspruchten Gegenstand gehören.

### Zeichnungen

Ausführungsbeispiele der Erfindung sind in den Zeichnungen dargestellt und werden in der nachfolgenden Beschreibung näher erläutert. Es zeigen, jeweils in schematischer Form
- Fig. 1: das technische Umfeld der Erfindung;
- Fig. 2: ein erstes Ausführungsbeispiel eines erfindungsgemäßen Verfahrens zur Einstellung des Brennbeginns durch eine offene Steuerkette; und
- Fig. 3: ein zweites Ausführungsbeispiel eines erfindungsgemäßen Verfahrens zur Einstellung des Brennbeginns in einer geschlossenen Regelschleife.

### Beschreibung der Ausführungsbeispiele

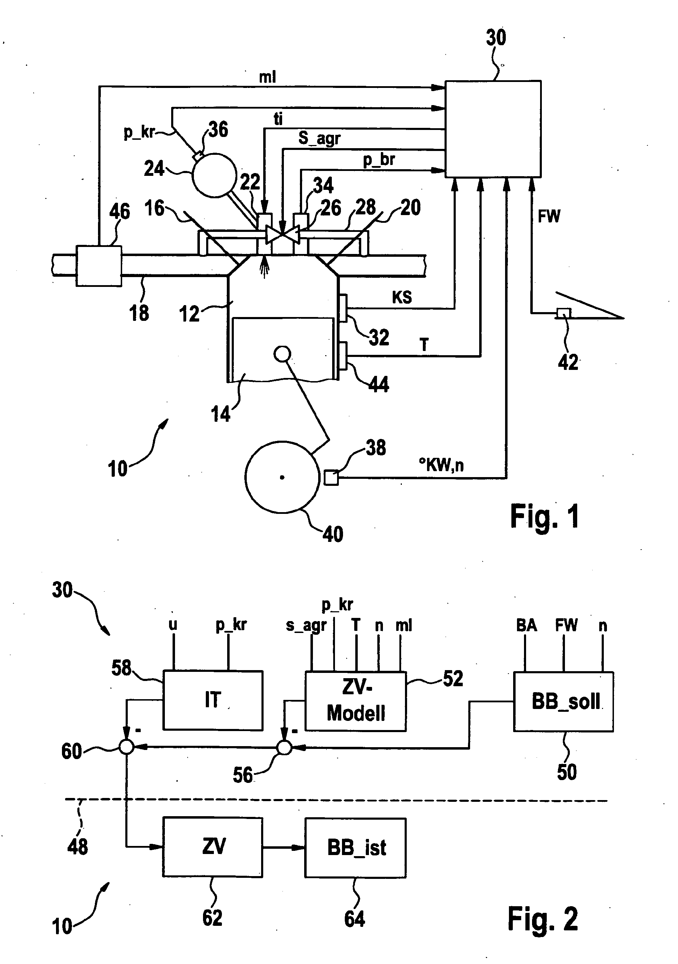

Im Einzelnen zeigt die Fig. 1 einen Dieselmotor 10 mit wenigstens einem Brennraum 12, der von einem Kolben 14 beweglich abgedichtet wird. Der Brennraum 12 wird über ein Einlassventil 16 mit Luft aus einem Saugrohr 18 befüllt. Verbrannte Gase werden über ein Auslassventil 20 ausgestoßen. Zur im Verdichtungstakt komprimierten Brennraumfüllung wird über einen Injektor 22 Kraftstoff aus einem Kraftstoffdruckspeicher 24 eingespritzt. Ferner wird dem Brennraum 12 Abgas über ein Abgasrückführventil 26 in einer Abgasrückführung 28 zugeführt. Der Injektor 22 und das Abgasrückführventil 26 werden von einem Steuergerät 30 angesteuert, das dazu Signale verschiedener Sensoren verarbeitet. In der Darstellung der Fig. 1 sind dies Verbrennungsmerkmalsensoren 32 und/oder 34, ein Kraftstoffdrucksensor 36, eine Winkelsensorik 38 an einem Bauteil 40, das sich synchron zu Arbeitsspielen des Dieselmotors 10 dreht, ein Fahrerwunschgeber 42, ein Temperatursensor 44 und ein Luftmassenmesser 46.

Das Bauteil 40 ist zum Beispiel eine drehfest mit einer Kurbelwelle des Dieselmotors 10 verbundene Schwungscheibe. Es kann jedoch in einer anderen Ausgestaltung beispielsweise mit einer Nockenwelle des Dieselmotors 10 verbunden sein. Es versteht sich, dass reale Dieselmotoren 10 noch weitere Sensoren wie zum Beispiel Abgastemperatursensoren aufweisen können. Ferner muss nicht jeder Dieselmotor 10 sämtliche Sensoren 32 bis 46 aufweisen. Eine Regelung des Verbrennungsbeginns kann zum Beispiel auf der Basis des Signals von nur einem Verbrennungsmerkmalsensor 32 oder 34 erfolgen. Der jeweils andere Sensor ist dann nicht notwendig. Bei einer Einstellung des Ansteuerbeginns in einer offenen Steuerkette kann auf beide Verbrennungsmerkmalsensoren 32, 34 verzichtet werden. Der Luftmassenmesser 46 ist ebenfalls nicht zwingend erforderlich.

Wesentlich für ein Verständnis der Erfindung ist jedoch, dass das Steuergerät 30 aus den zugeführten Sensorsignalen Ansteuersignale in Form von Impulsbreiten ti für Einspritzungen, mit dem Kraftstoff für eine Verbrennung im Brennraum 12 zugemessen wird, und in Form von Signalen S_agr zur Steuerung des Abgasrückführventils 26 ausgibt.

Bei dem Verbrennungsmerkmalsensor 34 handelt es sich um einen Brennraumdrucksensor, der einen Brennraumdruck p_br liefert, während es sich bei dem alternativ oder ergänzend vorhandenen Verbrennungsmerkmalsensor 32 um einen Körperschallsensor handelt, der ein Körperschallsignal KS liefert. Der Kraftstoffdrucksensor 36 signalisiert den Kraftstoffdruck oder Einspritzdruck p_kr. Die Winkelsensorik 38 liefert in der Ausgestaltung der Fig. 1 eine Kurbelwellen-Winkelinformation °KW als Information über die Position des Kolbens 14 in seinem Arbeitsspiel. Es versteht sich, dass diese Information nicht nur aus der Kurbelwellen-Winkelinformation, sondern beispielsweise auch aus einer Nockenwellen-Winkelinformation abgeleitet werden kann. Aus dem Winkelsignal °KW kann noch eine Information über die Drehzahl n des Dieselmotors abgeleitet werden. Der Fahrerwunsch FW stellt ein Maß für eine Drehmomentanforderung durch den Fahrer dar und wird zum Beispiel als Fahrpedalstellung durch den Fahrerwunschgeber 42 erfasst. Eine Motortemperatur T wird von dem Temperatursensor 44 bereitgestellt. Der Luftmassenmesser 46 liefert ein Maß für die in den Brennraum 12 strömende Luftmasse ml.

Fig. 2 zeigt ein erstes Ausführungsbeispiel eines Verfahrens zur Einstellung des Brennbeginns. In dieser Ausgestaltung wird der Brennbeginn mit einer offenen Steuerkette eingestellt. Die gestrichelte Linie 48 trennt Funktionen des Steuergeräts 30 von Funktionen des Dieselmotors 10. Zunächst erfolgt im Block 50 eine Bestimmung eines Sollwerts BB_soll für den Brennbeginn der Verbrennung, die mit der nächsten Einspritzung ausgelöst werden soll. Die Ermittlung erfolgt in Abhängigkeit von im Steuergerät 30 vorhandenen Signalen, insbesondere in Abhängigkeit von der Drehzahl n und einem Drehmomentwunsch, wie er durch den Fahrerwunsch FW vorgegeben wird.

Bei Dieselmotoren, die in verschiedenen Betriebsarten wie einem Magerbetrieb mit geschichteter Kraftstoffverteilung oder einem Homogenbetrieb mit homogenerer Kraftstoffverteilung im Brennraum 12 betrieben werden, erfolgt die Vorgabe des Brennbeginn-Sollwerts BB_soll ergänzend in Abhängigkeit von einem Signal BA, das die Betriebsart angibt. Dabei kann die Vorgabe durch Zugriff auf ein im Steuergerät 30 abgelegtes Kennfeld erfolgen, das durch die genannten Größen und gegebenenfalls weitere Größen adressiert wird. Als weitere Größe kommt zum Beispiel eine Drehmomentwunschvorgabe in Frage, die unabhängig von dem Fahrerwunsch FW im Steuergerät 30 erzeugt wird. Solche Drehmomentwunschvorgaben dienen zum Beispiel zur Unterstützung von Schaltvorgängen in automatischen Getrieben. Ein anderes Beispiel einer weiteren Größe ist ein Signal, das eine gewünschte Wirkungsgradverschlechterung zur Aufheizung von Abgasnachbehandlungskomponenten über eine Spätverschiebung des Brennbeginns und damit des Verbrennungsschwerpunkts herbeiführt.

Der vom Block 50 ausgegebene Sollwert BB_soll wird durch ein Rechenmodell für den Zündverzug korrigiert, das durch den Block 52 repräsentiert wird und das im Folgenden auch als Zündverzugsmodell bezeichnet wird. Das Zündverzugsmodell 52 bildet den Zündverzug auf der Basis von Betriebsparametern nach, die den Zustand der Brennraumfüllung vor und während der Einspritzung charakterisieren. Wesentliche Zustandsgrößen sind in diesem Zusammenhang die im Brennraum eingeschlossene Gasmasse, ihr Sauerstoffanteil und ihre Temperatur. Dabei verringert das Zündverzugsmodell den modellierten Zündverzug mit steigender Brennraumfüllung (Gasmasse), steigendem Sauerstoffanteil, abnehmender Tröpfchengröße des eingespritzten Kraftstoffs und steigender Temperatur der Brennraumfüllung und bildet damit das Verhalten des tatsächlichen Zündverzuges nach.

Die Brennraumfüllung ergibt sich im Wesentlichen durch die auf einen Ansaughub des Kolbens 14 normierte Masse angesaugter Luft und die Menge des in eine Brennraumfüllung zurückgeführten Abgases. Die Masse angesaugter Luft ergibt sich als Funktion des Signals ml des Luftmassenmessers 46 und der Drehzahl n. Analog kann die zurückgeführte Abgasmasse in einer Brennraumfüllung durch das die Abgasrückführung steuernde Signal S_agr und die Drehzahl n ermittelt werden.

Die Temperatur wird maßgeblich durch die Verdichtungswärme und durch Wärmeübergänge von Brennraumwandungen auf die Brennraumfüllung beeinflusst. Die Verdichtungswärme hängt von der Brennraumfüllung ab und der Temperatureffekt der Wärmeübergänge hängt von der Temperatur T des Dieselmotors 10 ab. Die Tröpfchengröße hängt vom Einspritzdruck p_kr ab.

Dabei bestehen zwischen den einzelnen Einflussgrößen Wechselwirkungen. So wirkt sich eine hohe Abgasrückführrate bei kleiner Frischluftmasse im Brennraum stärker aus als bei größerer Frischluftmasse. Auch der Effekt der Abgasrückführung auf die Brennraumtemperatur hängt von der Masse an Frischluft im Brennraum ab. In einer besonders bevorzugten Ausgestaltung wird der Zündverzug mit einem Rechenmodell geschätzt, das miteinander gekoppelte Einflüsse von wenigstens zwei Betriebsparametern des Dieselmotors nachbildet. Dabei ist ferner bevorzugt, dass einer der wenigstens zwei Betriebsparameter eine Abgasrückführrate ist. Wie bereits erwähnt wurde, beeinflusst die Abgasrückführrate insbesondere die Brennraumfüllung und/oder die Temperatur der Brennraumfüllung. Wegen der miteinander gekoppelten Einflüsse dieser Parameter wird die Brennraumfüllung und/oder die Temperatur bevorzugt als zweiter oder weiterer Parameter bei der Modellbildung verwendet. In einer. Ausgestaltung wird ein aus der Abgasrückführung resultierender Inertgasanteil an einer Brennraumfüllung bei der Schätzung eines Einflusses der Brennraumfüllung an dem Zündverzug berücksichtigt. Alternativ oder ergänzend wird eine aus der Abgasrückführrate resultierende Temperatursteigerung der Brennraumfüllung bei der Schätzung eines Einflusses der Temperatur der Brennraumfüllung berücksichtigt.

Ein mit dem Zündverzugsmodell 52 gebildeter Zündverzug wird von dem Sollwert für den Brennbeginn aus der dem Block 50 subtrahiert. In der Funktionsstruktur der Fig. 2 erfolgt die Subtraktion in der Verknüpfung 56. Ordnet man dem oberen Totpunkt OT des Kolbens 14 im Verdichtungstakt eine Null als feste Winkelposition zu, so besitzen die in der Regel vor dem oberen Totpunkt liegenden Sollwerte für den Brennbeginn ein negatives Vorzeichen. Durch Subtrahieren des betragsmäßig gebildeten Zündverzugs in der Verknüpfung 56 wird damit ein Sollwert für den Einspritzbeginn gebildet, der zeitlich vor dem Sollwert für den Brennbeginn liegt.

Von diesem Sollwert für den Einspritzbeginn wird ferner eine Anzugsverzögerung oder Injektortotzeit IT subtrahiert, die zwischen einem Ansteuern des Injektors und einem tatsächlichen Öffnen eines Durchflussquerschnitts im Injektor 22 verstreicht. Diese Injektortotzeit kann zum Beispiel von der Batteriespannung und/oder Versorgungsspannung u und dem Kraftstoffdruck p_kr abhängen, mit deren Hilfe Einspritzimpulsbreiten für einen Injektor 22 gebildet werden. In der Darstellung der Fig. 2 wird eine solche Injektortotzeit in dem Block 58 gebildet und in der Verknüpfung 60 von dem Sollwert für den Einspritzbeginn subtrahiert. Das Ergebnis der Verknüpfung 60 ist der tatsächliche Ansteuerbeginn, ab dem ein Injektor 22 mit einer öffnenden Einspritzimpulsbreite ti angesteuert werden muss, um nach einem tatsächlich auftretenden Zündverzug ZV einen gewünschten Brennbeginn zu realisieren. In der Darstellung der Fig. 2 repräsentiert der Block 62 den tatsächlichen Zündverzug ZV und der Block 64 den tatsächlichen Brennbeginn und damit einen Istwert BB_ist des Brennbeginns.

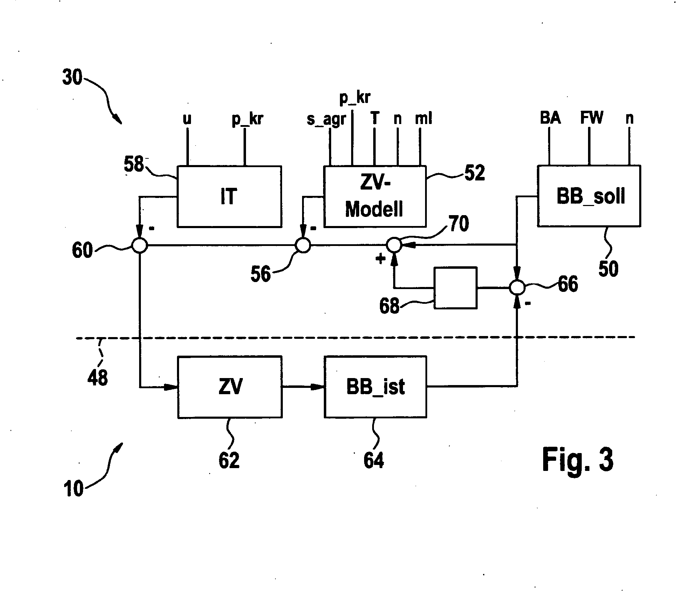

Fig. 2 stellt damit eine Bildung eines Ansteuerbeginns für einen Injektor 22 dar, die in einer offenen Steuerkette erfolgt und die auf der Vorgabe eines Sollwerts für den Brennbeginn basiert, aus dem mit Hilfe eines Rechenmodells für den Zündverzug ein Ansteuerbeginn gebildet wird. Alternativ kann der Ansteuerbeginn auch in einer geschlossenen Regelschleife gebildet und korrigiert werden. Ein solche Regelschleife ist in der Fig. 3 dargestellt. Der Gegenstand der Fig. 3 unterscheidet sich von dem Gegenstand der Fig. 2 durch die Elemente 66, 68 und 70. Gleiche Bezugszeichen bezeichnen gleiche Gegenstände. In der Verknüpfung 66 wird eine Regelabweichung aus dem Sollwert für den Brennbeginn und einem Istwert für den Brennbeginn gebildet. Der Istwert BB_ist wird durch Verarbeitung der Signale von einem oder beiden der Verbrennungsmerkmalsensoren 32, 34 ermittelt. Ein Regler 68 verarbeitet die Regelabweichung zu einer Stellgröße, die in der Ausgestaltung der Fig. 3 in einer Verknüpfung 70 mit dem Sollwert für den Brennbeginn verknüpft wird. Es versteht sich, dass die Verknüpfung 70 auch zwischen den Verknüpfungen 56 und 60 oder zwischen der Verknüpfung 60 und dem Block 62 liegen kann.

## Patentansprüche

1. Verfahren zur Ansteuerung eines Kraftstoff-Injektors (22) eines Dieselmotors (10) mit einer vorbestimmten Ansteuerdauer ab einem Ansteuerbeginn, wobei ein Sollwert (BB_soll) für einen Brennbeginn einer Brennraumfüllung des Dieselmotors (10) ermittelt wird, **dadurch gekennzeichnet, dass** ein Zündverzug (ZV), der zwischen dem Ansteuerbeginn und dem Brennbeginn liegt, aus Betriebsparametern des Dieselmotors (10) mit einem Rechenmodell (52) geschätzt wird und der Ansteuerbeginn auf der Basis des Sollwerts (BB_soll) für den Brennbeginn und des geschätzten Zündverzugs (ZV) gebildet wird und dass Istwerte (BB_ist) des Verbrennungsbeginns ermittelt werden und in einer geschlossenen Regelschleife auf den Sollwert (BB_soll) eingestellt werden.

2. Verfahren nach Anspruch 1, **dadurch gekennzeichnet, dass** der Zündverzug (ZV) mit einem Rechenmodell (52) geschätzt wird, dass miteinander gekoppelte Einflüsse von wenigstens zwei Betriebsparametern des Dieselmotors (10) nachbildet.

3. Verfahren nach Anspruch 2, **dadurch gekennzeichnet, dass** einer der wenigstens zwei Betriebsparameter eine Abgasrückführrate (s_agr) ist.

4. Verfahren nach Anspruch 3, **gekennzeichnet durch** eine Brennraumfüllung und/oder eine Temperatur (T) der Brennraumfüllung als Parameter.

5. Verfahren nach Anspruch 3, **dadurch gekennzeichnet, dass** ein aus der Abgasrückführung resultierender Inertgasanteil an einer Brennraumfüllung bei der Schätzung eines Einflusses der Brennraumfüllung an dem Zündverzug berücksichtigt wird.

6. Verfahren nach einem der Ansprüche 3 bis 5, **dadurch gekennzeichnet, dass** eine aus der Abgasrückführrate resultierende Temperatursteigerung der Brennraumfüllung bei der Schätzung eines Einflusses der Temperatur der Brennraumfüllung berücksichtigt wird.

7. Steuergerät (30), das einen Kraftstoff-Injektor (22) eines Dieselmotors (10) mit einer vorbestimmten Ansteuerdauer von einem Ansteuerbeginn an ansteuert und dazu einen Sollwert (BB_soll) für einen Brennbeginn einer Brennraumfüllung des Dieselmotors (10) ermittelt, **dadurch gekennzeichnet, dass** das Steuergerät (30) einen Zündverzug (ZV), der zwischen dem Ansteuerbeginn und dem Brennbeginn liegt, aus Betriebsparametern des Dieselmotors (10) schätzt und den Ansteuerbeginn aus dem Sollwert (BB_soll) für den Brennbeginn und dem geschätzten Zündverzug bildet und Istwerte (BB_ist) des Verbrennungsbeginns ermittelt und in einer geschlossenen Regelschleife auf den Sollwert (BB_soll) einstellt.

8. Steuergerät (30) nach Anspruch 7, **dadurch gekennzeichnet, dass** es einen Ablauf von wenigstens einem der Verfahren nach den Ansprüchen 2 bis 6 steuert.

## Claims

1. Method for activating a fuel injector (22) of a diesel engine (10) with a predetermined activation duration from an activation start, a desired value (BB_des) being determined for a combustion start of a combustion-space filling of the diesel engine (10), **characterized in that** an ignition delay (ID) which lies between the activation start and the combustion start is estimated from operating parameters of the diesel engine (10) by means of a computing model (52), and the activation start is formed on the basis of the desired value (BB_des) for the combustion start and of the estimated ignition delay (ID), and **in that** actual values (BB_act) of the combustion start are determined and are set at the desired value (BB_des) in a closed control loop.

2. Method according to Claim 1, **characterized in that** the ignition delay (ID) is estimated by means of a computing model (52) which simulates influences, coupled to one another, of at least two operating parameters of the diesel engine (10).

3. Method according to Claim 2, **characterized in that** one of the at least two operating parameters is an exhaust-gas recirculation rate (s_egr).

4. Method according to Claim 3, **characterized by** a combustion-space filling and/or a temperature (T) of the combustion-space filling as parameters.

5. Method according to Claim 3, **characterized in that** an inert-gas fraction, resulting from the exhaust-gas recirculation, of a combustion-space filling is taken into account in the estimation of an influence of the combustion-space filling on the ignition delay.

6. Method according to one of Claims 3 to 5, **characterized in that** a temperature rise, resulting from the exhaust-gas recirculation rate, of the combustion-space filling is taken into account in the estimation of an influence of the temperature of the combustion-space filling.

7. Control apparatus (30) which activates a fuel injector (22) of a diesel engine (10) with a predetermined activation duration from an activation start and, for this purpose, determines a desired value (BB_des) for a combustion start of a combustion-space filling of the diesel engine (10), **characterized in that** the control apparatus (30) estimates an ignition delay (ID), which lies between the activation start and the combustion start, from operating parameters of the diesel engine (10) and forms the activation start from the desired value (BB_des) for the combustion start and from the estimated ignition delay and determines actual values (BB_act) of the combustion start and sets them to the desired value (BB_des) in a closed control loop.

8. Control apparatus (30) according to Claim 7, **characterized in that** it controls a flow of at least one of the methods according to Claims 2 to 6.

## Revendications

1. Procédé pour commander un injecteur de carburant (22) d'un moteur diesel (10) avec une durée de commande prédéterminée à partir d'un début de la commande, une valeur de consigne (BB_soll) pour un début de combustion d'un remplissage de la chambre de combustion du moteur diesel (10) étant déterminée, **caractérisé en ce qu'**un retard d'allumage (ZV) qui a lieu entre le début de la commande et le début de la combustion est estimé à partir de paramètres de fonctionnement du moteur diesel (10) avec un modèle de calcul (52), et le début de la commande est formé sur la base de la valeur de consigne (BB_soll) pour le début de la combustion et du retard d'allumage estimé (ZV), et **en ce que** des valeurs réelles (BB_ist) du début de la combustion sont déterminées et sont ajustées à la valeur de consigne (BB_soll) dans une boucle de calcul fermée.

2. Procédé selon la revendication 1, **caractérisé en ce que** le retard d'allumage (ZV) est estimé avec un modèle de calcul (52), qui reproduit des influences couplées les unes aux autres d'au moins deux paramètres de fonctionnement du moteur diesel (10) .

3. Procédé selon la revendication 2, **caractérisé en ce que** l'un des au moins deux paramètres de fonctionnement est un taux de recirculation de gaz d'échappement (s_agr).

4. Procédé selon la revendication 3, **caractérisé en ce que** l'on utilise comme paramètre un remplissage de la chambre de combustion et/ou une température (T) du remplissage de la chambre de combustion.

5. Procédé selon la revendication 3, **caractérisé en ce qu'**une proportion de gaz inerte d'un remplissage de la chambre de combustion, résultant de la recirculation de gaz d'échappement, est prise en compte lors de l'estimation d'une influence du remplissage de la chambre de combustion sur le retard d'allumage.

6. Procédé selon l'une quelconque des revendications 3 à 5, **caractérisé en ce qu'**une augmentation de température du remplissage de la chambre de combustion, résultant du taux de recirculation de gaz d'échappement, est prise en compte lors de l'estimation d'une influence de la température du remplissage de la chambre de combustion.

7. Appareil de commande (30), qui commande un injecteur de carburant (22) d'un moteur diesel (10) avec une durée de commande prédéterminée à partir d'un début de commande, et détermine à cet effet une valeur de consigne (BB_soll) pour un début de combustion d'un remplissage de la chambre de combustion du moteur diesel (10), **caractérisé en ce que** l'appareil de commande (30) estime un retard de combustion (ZV) qui est situé entre le début de la commande et le début de la combustion à partir de paramètres de fonctionnement du moteur diesel (10) et forme le début de la commande à partir de la valeur de consigne (BB_soll) pour le début de la combustion et du retard de combustion et détermine des valeurs réelles (BB_ist) du début de la combustion et les ajuste dans une boucle de régulation fermée à la valeur de consigne (BB_soll).

8. Appareil de commande (30) selon la revendication 7, **caractérisé en ce qu'**il commande un déroulement d'au moins l'un des procédés selon les revendications 2 à 6.
